# EUROPEAN PATENT APPLICATION

(11) **EP 2 309 767 A2**
(43) Date of publication of application: **13.04.2011**
(21) Application number: 10175845.6
(22) Date of filing: 08.09.2010
(51) Int. Cl.: H04N 13/00

(54) **Reception, transmission and playback control of stereoscopic image data**

(30) Priority: 16.09.2009 JP 2009214296
(71) Applicant: Sony Corporation, Tokyo (JP)
(72) Inventor: Kitazato, Naohisa, Tokyo (JP)
(74) Representative: Thévenet, Jean-Bruno

(57) **Abstract**

Receiving device, receiving method, transmission device and computer program. There is provided a receiving device including a receiving section (132) receiving image data displaying a stereoscopic image in some portion of a program, procedure description information transmitted with broadcast signals and included supply source information of the stereoscopic image data, and switching instruction information indicating a switching timing instruction of the stereoscopic image transmitted with the broadcast signals, a procedure description information analyzing section switching a supply source of the stereoscopic image data based on an analysis of procedure description information, a switch notifying section notifying the procedure description information analyzing section of a switching of the stereoscopic image data when switching instruction information reaches while standing by for switching instruction information of the stereoscopic image data based on the analysis, and a playback control section switching to reception/playback of the stereoscopic image data based on supply source information and the switching instruction for the stereoscopic image data.

## Description

### BACKGROUND OF THE INVENTION

### Field of the Invention

The present invention relates to a receiving device, a receiving method, a transmission device and a computer program.

### Description of the Related Art

It is expected that three-dimensional (3D) broadcast service will become widely available. The 3D broadcast service allows a viewer to enjoy stereoscopic video by displaying three-dimensional images. In order to achieve the 3D broadcast service, it is considered to be desirable that requirements described below are satisfied.

For example, a program of a channel that displays three-dimensional images or content (a 3D channel) that displays three-dimensional images (3D content) is not necessarily created exclusively by signals for displaying three-dimensional images (3D signals). It is considered that three-dimensional images are more likely to be used for a part of the program or a part of the content. In the case of broadcast, if three-dimensional images are constantly displayed on the screen, the viewer becomes tired of viewing them. Further, production costs will be increased if the whole program or content is produced to be 3D compatible. Further, 3D expression is effective for only a limited type of video. Therefore, it is assumed that the 3D broadcast service will be used in a limited way such that only a particular program or only a particular scene is three-dimensionally displayed.

Further, even when three-dimensional images are intended to be displayed by 3D broadcast, it is necessary to ensure that a video signal can be transmitted using a normal broadcast band. Therefore, even when only a part of the program or a part of the content is produced to be 3D compatible, it is desirable that a wider band is not required as compared to a case of displaying normal two-dimensional (2D) images.

Further, it is desirable that the service or content for a 3D part can be used also by a known receiver that is not capable of displaying three-dimensional images. For that reason, even with a receiver capable of displaying three-dimensional images, it is necessary to design the receiver such that the 3D part can be viewed as 2D images.

Moreover, even when a 3D program or 3D content is received by a receiver that is capable of displaying three-dimensional images (a 3D compatible receiver), the user of the 3D compatible receiver may not want to watch video in 3D. Therefore, it is desired that the 3D compatible receiver allows the user to select either 2D video viewing or 3D video viewing and to switch between them. In addition, when 2D video is displayed by the 3D compatible receiver, it is preferable to provide image quality equivalent to that of normal 2D video.

A technology that performs switching between 2D video and 3D video and performs display using a 3D compatible receiver is disclosed in Japanese Patent Application Publication No. JP-A-2005-6114 and Japanese Patent Application Publication No. JP-A-2007-13994, for example.

### SUMMARY OF THE INVENTION

However, with known technologies, it is assumed that switching between 2D video and 3D video is performed using one stream. A video data transmission method that is compatible with both the 3D compatible receiver and the 3D incompatible receiver is not taken into consideration.

In light of the foregoing, it is desirable for the present invention to provide a receiving device, a receiving method, a transmission device and a computer program, which are novel and improved, and which enable, in a case where stream to display 3D video is transmitted separately from stream to display 2D video, to transmit information on switching between 2D video and 3D video accompanying broadcasting, and which enable, on a receiver side, to analyze the information to display switching between 2D video and 3D video.

Various respective aspects and features of the invention are defined in the appended claims.

According to an embodiment of the present invention, there is provided a receiving device which includes a receiving section that receives image data that displays a stereoscopic image in some portion of a program in a broadcast channel, a procedure description information that comprises of supply source information of the stereoscopic image data when displaying the stereoscopic image transmitted along with broadcast signals, and a switching instruction information that indicates an instruction timing for switching of the stereoscopic image transmitted along with the broadcast signals, a procedure description information analyzing section that analyzes the procedure description information received by the receiving section and switches the supply source of the stereoscopic image data based on the analysis result, a switch notifying section that stands by for the switching instruction information of the stereoscopic image data based on an analysis of the procedure description information by the procedure description information analyzing section, and notifying the procedure description information analyzing section when the switching instruction information for switching to the stereoscopic image data has been received, and a playback control section that switches to playback the stereoscopic image data based on the supply source information from the procedure description information analyzing section and the switching instruction for the stereoscopic image data from the procedure description information analyzing section.

If an ES (Elementary Stream) specified by then supply source is different from the ES specified by the broadcast signal, the playback control section may receive and switch to playback the ES specified by the supply source according to an analysis result of the procedure description information.

When a supply source of a stereoscopic image data is a streaming transmission from a server as a result of analysis by the procedure description information analyzing section, confirming whether the receiving device has a streaming receiving function, then the playback control section may receive and switch to playback the streaming transmitted from the server specified by the supply source.

When a supply source of a stereoscopic image data needs to be downloaded in advance prior to the portion as a result of analysis by the procedure description information analyzing section, the playback control section may confirm whether the receiving device has a download function and whether the stereoscopic image data has been downloaded in advance in the receiving device switches to playback data specified by the supply source according to an analysis result of continued procedure description information.

According to another embodiment of the present invention, there is provided a receiving method which includes receiving image data that displays a stereoscopic image in some portion of a program in a broadcast channel, procedure description information that comprises of supply source information of the stereoscopic image data at a time of displaying the stereoscopic image transmitted along with broadcast signals and that includes, and a switching instruction information that indicates an instruction timing for switching of the stereoscopic image transmitted along with the broadcast signals, analyzing the procedure description information received by the receiving section, and switches the supply source of the stereoscopic image data based on the analysis result, standing by for the switching instruction information of the stereoscopic image data based on an analysis of the procedure description information and notifying the switching of the stereoscopic image data when switching instruction information is received, and controlling a playback that switches to playback the stereoscopic image data based on supply source information obtained as a result of the step of analyzing the procedure description information and the switching instruction for the stereoscopic image data in the step of notifying a switching.

According to another embodiment of the present invention, there is provided a transmission device which includes a procedure description information generation section which generates procedure description information, that comprises of a supply source information of the stereoscopic image data when displaying a stereoscopic image data that displays a stereoscopic image in some portion of a program in a broadcast channel, and a transmitting section that transmits procedure description information generated by the procedure description information generation section along with broadcast signals.

According to another embodiment of the present invention, there is provided a computer program causing a computer to execute the steps of receiving image data that displays a stereoscopic image in some portion of a program in a broadcast channels, procedure description information that comprises of a supply source information of the stereoscopic image data at a time of displaying the stereoscopic image transmitted along with broadcast signals , and a switching instruction information that indicates an instruction timing for switching to the stereoscopic image transmitted along with the broadcast signals, analyzing the received procedure description information and switches to the supply source of the stereoscopic image data based on the analysis result, standing by for the switching instruction information of the stereoscopic image data based on the analysis of the procedure description information, and notifying a switching to the stereoscopic image data when switching instruction information is received and controlling a playback that switches to playback the stereoscopic image data based on supply source information obtained as a result of the step of analyzing the procedure description information and the switching instruction for the stereoscopic image data in the step of notifying.

According to the present invention described above, it is possible to provide a receiving device, a receiving method, a transmission device and a computer program, which are novel and improved, and which enable, in a case where a stream to display 3D video is transmitted separately from a stream to display 2D video, to transmit information on switching between 2D video and 3D video accompanying broadcasting, and which enable, on a receiver side, to analyze the information to display switching between 2D video and 3D video.

### BRIEF DESCRIPTION OF THE DRAWINGS

FIG. 1 is an explanatory diagram showing a concept of an operation mode in which a 3D stream is transmitted over an additional band;
FIG. 2 is an explanatory diagram showing variations of a transmission media mode in a 3D video section;
FIG. 3 is an explanatory diagram showing a layer configuration of signals used in an embodiment of the present invention;
FIG. 4 is an explanatory diagram showing a configuration of a server according to an embodiment of the present invention;
FIG. 5 is an explanatory diagram showing a configuration of a terminal according to an embodiment of the present invention;
FIG. 6 is an explanatory view showing the overview of switching process between 2D broadcast channel and 3D broadcast channel by script;
FIG. 7A is a flowchart showing the switching process between 2D broadcast channel and 3D broadcast channel by script;
FIG. 7B is a flowchart showing the switching process between 2D broadcast channel and 3D broadcast channel by script;
FIG. 8 is an explanatory view showing the overview of switching process between 2D broadcast channel and 3D streaming by script;
FIG. 9 is a flowchart showing the switching process between 2D broadcast channel and 3D streaming by script;
FIG. 10 is an explanatory view showing the overview of switching process between 2D broadcast channel and playback of downloaded 3D content by script; and
FIG. 11 is a flow chart showing the switching process between 2D broadcast channel and playback of downloaded 3D content by script;

### DETAILED DESCRIPTION OF THE EMBODIMENT(S)

Hereinafter, preferred embodiments of the present invention will be described in detail with reference to the appended drawings. Note that, in this specification and the appended drawings, structural elements that have substantially the same function and structure are denoted with the same reference numerals, and repeated explanation of these structural elements is omitted.

Note that the explanation will be in the order shown below.
1. Assumed video transmission systems
2. Transmission media mode in 3D video section
3. Layer configuration of signals
4. Configuration of server
5. Configuration of terminal
6. Interface of the script
7. Switching process between 2D broadcast channel and 3D broadcast channel by script;
7-1. Switching process between 2D broadcast channel and 3D broadcast channel
7-2. Switching process between 2D broadcast channel and 3D streaming
7-3. Switching process between 2D broadcast channel and playback of downloaded 3D content by script;

### 8. Summary

### 1. Assumed video transmission systems

First, before describing an exemplary embodiment of the present invention in detail, 3D video transmission modes will be described that are assumed to be the premise of the embodiment of the present invention. Then, the exemplary embodiment of the present invention that covers the 3D video transmission modes will be described.

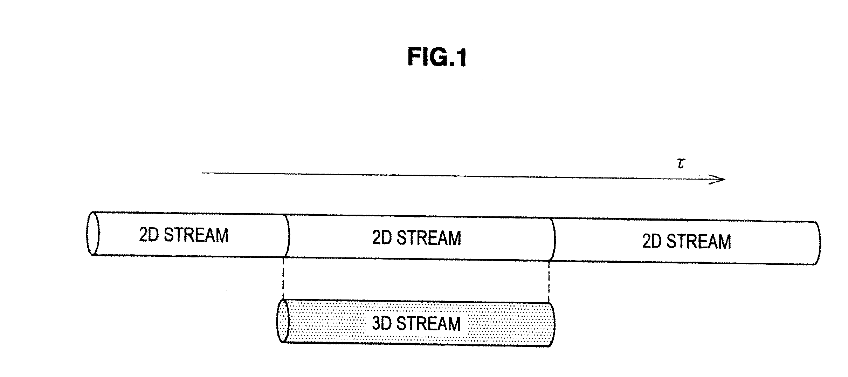

In the embodiment of the present invention, its premise is an operation mode in which an AVC based (or an MPEG2 based) 3D stream is transmitted over an additional band only during a period for providing 3D video, on a 2D stream channel. From an operation point of view, it may be difficult to prepare an additional band, even if temporarily. However, the preparation of the additional band may be easily achieved, if another elementary stream (ES) is prepared on one channel, if another channel that is physically available is prepared, if data is downloaded in advance via a network or via a broadcast station, or if streaming transmission is performed via the network. FIG. 1 is an explanatory diagram showing a concept of an operation mode in which an AVC-based (or an MPEG2-based) 3D stream is transmitted over an additional band.

In this operation mode, the 2D stream is used as a base, and the 3D stream is transmitted over a other band only during a period for providing 3D video (hereinafter also referred to as the 3D video period). As a result, when a 3D incompatible receiver is used, 2D video can be displayed also during the 3D video period without any change. When a 3D compatible receiver is used, it is possible to appropriately switch between 3D video display and normal 2D video display.

In addition, in this operation mode, if a band sufficient to transmit a plurality of 3D streams is ensured, compatibility with a plurality of 3D display methods is achieved. Examples of the 3D display method include a side by side system, a top and bottom system, and video signals to be transmitted also vary depending on the display method. FIG. 1 shows a case in which 3D streams based on a plurality of display methods are transmitted during the 3D video period. By transmitting the 3D streams based on a plurality of methods in this manner, this operation mode can be used even when a plurality of display methods exist for 3D compatible receivers that display 3D video.

### 3. Transmission media mode in 3D video section

Next, an example of a transmission media mode in a 3D video section will be described. The following variations are conceivable as the transmission media in the 3D video section.
(1) Other ES in broadcast stream
(2) Other broadcasting TS
(3) Streaming
(4) Downloading

First, (1) 3D stream transmission using other elementary stream (ES) in a broadcast stream is assumed. With this transmission method, the width of the band in the 3D video section may be twice the normal width or more in some cases, and management of the broadcast band may become difficult.

Next, (2) 3D stream transmission using other broadcasting transport stream (TS) is assumed. With this transmission method, another physical channel is selected automatically or by a switching operation by the user, in the 3D video section, When the 3D video section is completed, the channel is automatically returned to the original channel. The band management is difficult, similarly to the above described method (1), however, since a 3D stream is transmitted using other physical channel, there is an advantage that a degree of freedom in operation is increased as compared to the above-described method (1).

Next, (3) 3D stream transmission by streaming is assumed. This transmission method is considered to be advantageous in that the management of the broadcast band is not necessary, as compared to the above-described method (1) and method (2). However, with this method, there are issues to be addressed. Examples of the issues to be addressed include: a delay until a session is established between the receiver and a server that transmits a 3D stream; congestion due to simultaneous access from a plurality of receivers in the case of unicast transmission; and time position control.

Finally, (4) 3D stream transmission by downloading is assumed. Similarly to the above-described method (3), the management of the broadcast band is not necessary in this transmission method. From this point of view, this transmission method is considered to be advantageous as compared to the above-described method (1) and method (2). Further, a degree of freedom in operation is high because download can be performed via broadcast or communication, and 3D video playback is performed using data downloaded in advance. As a result, this method is also considered to be advantageous in that the issues to be addressed in the above-described method (3) are not present. On the other hand, a storage device for storing the downloaded data is required for the receiver, and a specification is required to ensure that data be downloaded to the receiver before start of the 3D video section.

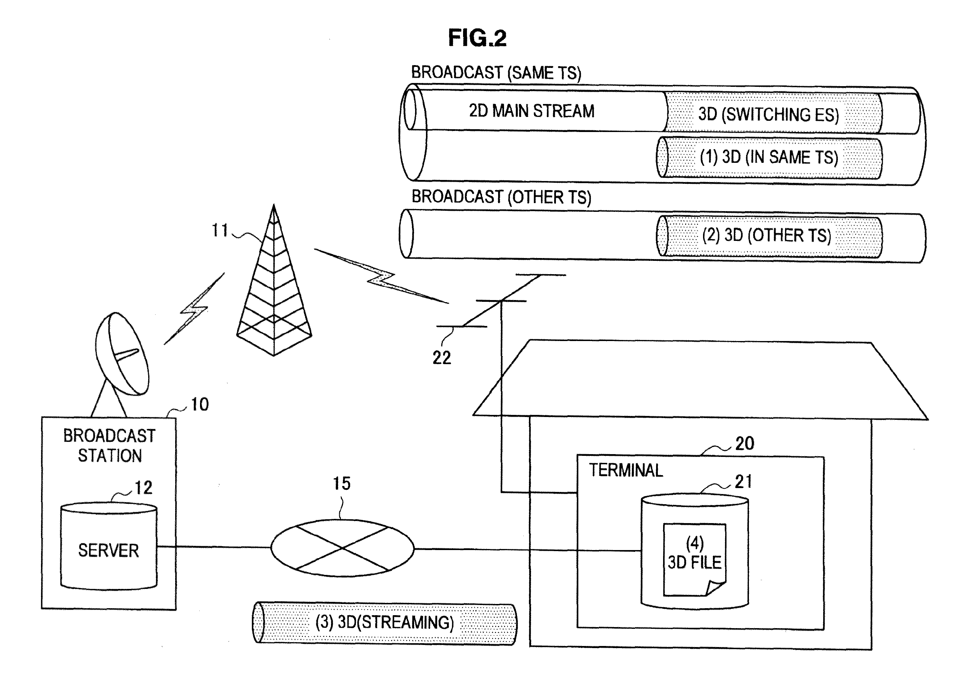

FIG. 2 is an explanatory diagram showing variations of the transmission media mode in the 3D video section. Streams and data are transmitted from a broadcast station 10, via an antenna 11 or a server 12, to a terminal 20 provided in each house. The numbers (1) to (4) in FIG. 2 respectively correspond to the methods (1) to (4) described above.

In the above-described methods (1) to (2), radio waves transmitted via the antenna 11 are received by an antenna 22 provided on each house, and streams are played back, thereby displaying 3D video on the terminal 20. With the above-described method (3), the terminal 20 receives the data transmitted from the server 12 via a network 15 such as the Internet or the like, and plays back the streams, thereby displaying 3D video on the terminal 20. Further, with the above-described method (4), data is downloaded in advance to a storage device 21 that is incorporated in the terminal 20 (or that is connected to the terminal 20), and the data in the storage device 21 is played back in the 3D video section, thereby displaying 3D video on the terminal 20.

Note that FIG. 2 assumes variations of the transmission media mode in the 3D video section other than the above. It shows a switching between 2D stream and 3D stream in the same ES. However, in the present embodiment, it is not considered a case where 2D stream and 3D stream are switched in the same ES. Therefore, the explanation on the case where 2D stream and 3D stream are switched in the same ES will be omitted below.

### 3. Layer configuration of signals

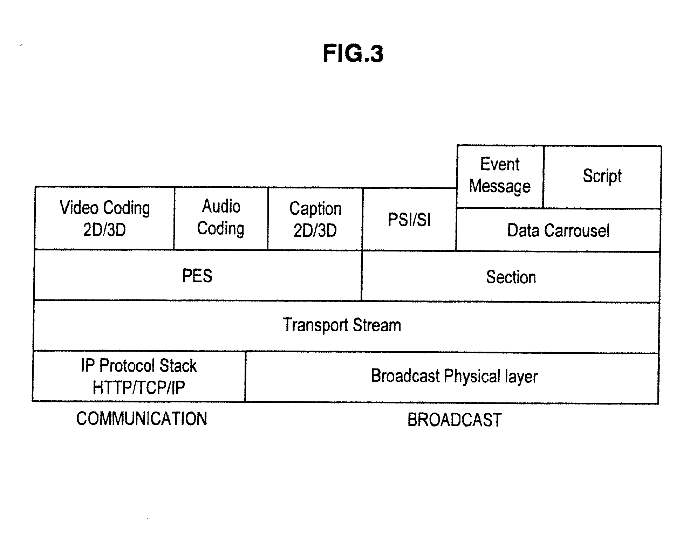

Next, a layer configuration of signals when transmitting 3D video which is to be the premise of the embodiment of the present invention will be explained. FIG. 3 is an explanatory diagram showing the layer configuration of signals used in an embodiment of the present invention.

The first layer which is the bottom layer is configured of IP protocol stack including HTTP and TCP/IP, and broadcast physical layer that transmits broadcast signals.

The second layer located at a higher level to the first layer is a layer for transport stream. The third layer located at a higher level to the second layer is a layer for PES (Packetized Elementary Stream) transmission and section transmission.

The fourth layer located at a higher level to the layer for PEF transmission is configured of a layer for transmitting encoded 2D video data or 3D video data, a layer for transmitting encoded audio data, and a layer for transmitting encoded caption data to be displayed on 2D video or 3D video. The fourth layer located at a higher level to the layer for section transmission is a layer for PSI/SI (Program Specific Information/Service Information) and for data carrousel. Further, at a higher level to the layer for data carrousel, a layer for transmission of event message, and a layer for transmission of script which is an example of procedure description information according to the present invention are placed.

The embodiment of the present invention has **characteristics in that** 2D video and 3D video is automatically switched by information transmitted from a side of broadcast station using a layer for event message and a layer for script, one of examples of procedure description information according to the present invention which are located at a higher level to the layer for data carrousel, on a side of terminal which received the information.

The Configuration of signals used in the embodiment of the present invention is explained with reference to FIG. 3 above. Next, a configuration of a server 12 according to an embodiment of the present invention will be explained.

### 4. Configuration of server

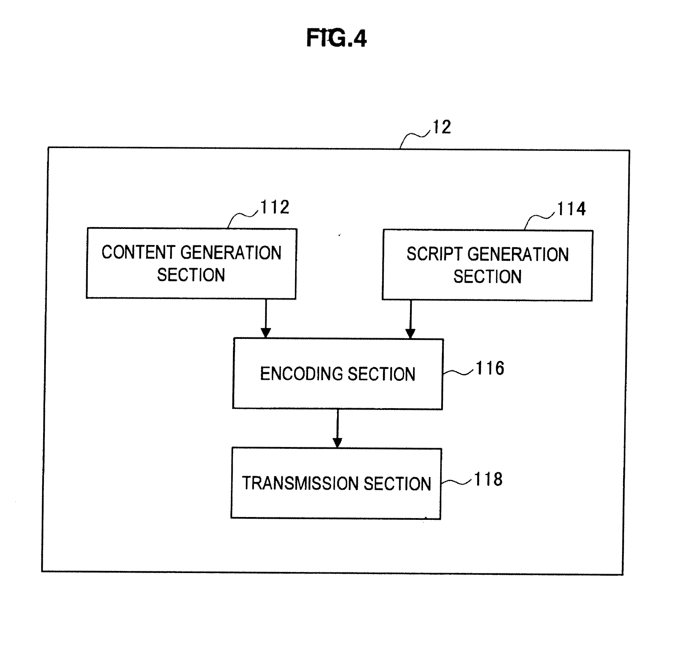

FIG. 4 is an explanatory diagram showing an example of the configuration of the server 12 according to the embodiment of the present invention. Hereinafter, the configuration of the server 12 according to the embodiment of the present invention will be described with reference to FIG. 4.

As shown in FIG. 4, the server 12 includes a content generation section 112, a script generation section 114, an encoding section 116 and a transmitting section 118.

The content generation section 112 generates data of video content including 2D video or 3D video. The data of the video content generated by the content generation section 112 can be displayed on the terminal 20 as 2D video or 3D video. The data of the video content generated by the content generation section 112 is transmitted to the encoding section 116.

The script generation section 114 is an example of the procedure description information of the present invention, and generates script for automatically switching 2D video and 3D video on the terminal 20. The script which the script generation section 114 generates is transmitted to the encoding section 116. Note that an interface which enables to switch automatically between 2D video and 3D video in the script generated by the script generation section 114 will be described later.

The encoding section 116 encodes, using a predetermined encoding system, the data of the video content generated by the content generation section 112 and the script generated by the script generation section 114. The data encoded by the encoding section 116 is transmitted to the transmitting section 118.

The transmitting section 118 transmits the data encoded by the encoding section 116. The data encoded by the encoding section 116 may be transmitted from the antenna 11, or may be transmitted via the network 15.

The example of the configuration of the server 12 according to the embodiment of the present invention is described above with reference to FIG. 4. Next, a configuration of the terminal 20 according to the embodiment of the present invention will be described.

5. Configuration of terminal

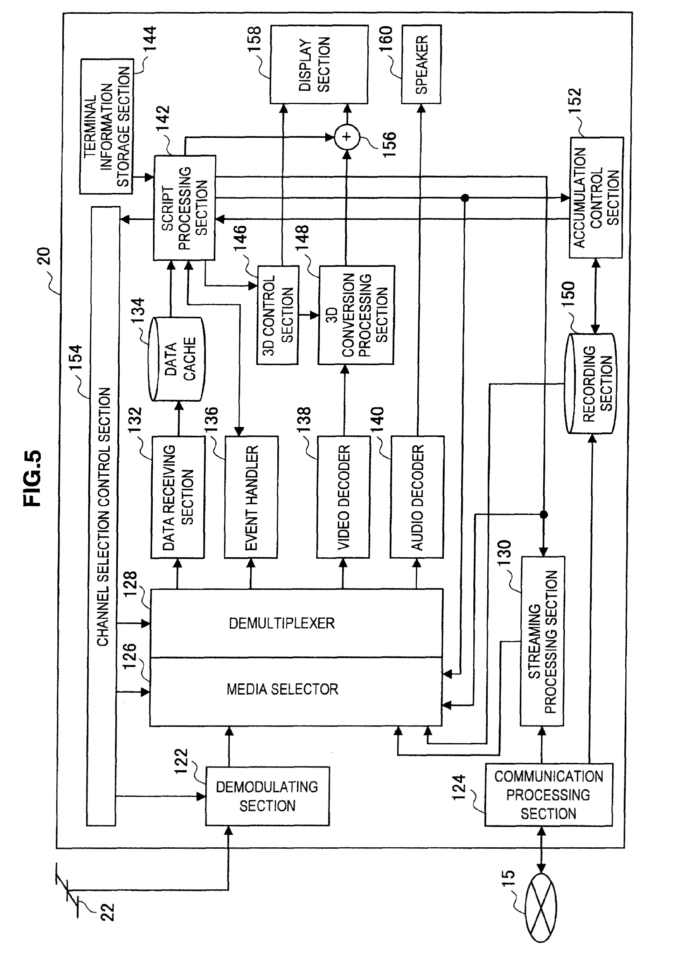

FIG. 5 is an explanatory diagram showing an example of the configuration of the terminal 20 according to the embodiment of the present invention. Hereinafter, the configuration of the terminal 20 according to the embodiment of the present invention will be described with reference to FIG. 5.

As shown in FIG. 5, the terminal 20 according to the embodiment of the present invention includes a demodulating section 122, a communication processing section 124, a media selector 126, a demultiplexer 128, a streaming processing section 130, a data receiving section 132, a data cache 134, an event handler 136, a video decoder 138, an audio decoder 140, a script processing section 142, a terminal information storage section 144, a 3D control section 146, a 3D conversion processing section 148, a recording section 150, an accumulation control section 152, a channel selection control section 154, an adding section 156, a display section 158, and a speaker 160.

The demodulating section 122 receives digital broadcast signals, which have been supplied by the antenna 22, and extracts, from the broadcast signals that has been received, a broadcast signal in a predetermined band corresponding to a predetermined program. The demodulating section 122 executes a demodulating processing to the broadcast signals that has been extracted, and supplies a packet, obtained as a result of the demodulating processing, to the media selector 126. When the demodulating section 122 extracts the broadcast signals, a band from which to be extracted is specified by an instruction from the channel selection control section 154.

The communication processing section 124 receives signals transmitted via the network 15, or transmits signals to the network 15. When the communication processing section 124 receives the stream of the program (content) transmitted from the server 12 via the network 15, the terminal 20 supplies the received stream to the streaming processing section 130.

The media selector 126 selects and outputs any one of a signal demodulated by the demodulating section 122, a signal demodulated by the streaming processing section 130, or a signal recorded in the recording section 150. The script processing section 142 determines which signal the media selector 126 selects. The signal selected by the media selector 126 is transmitted to the demultiplexer 128.

The demultiplexer 128 separates and outputs the signals supplied from the media selector 126. The demultiplexer 128 separates and outputs signals to the data receiving section 132, the event handler 136, the video decoder 138, and the audio decoder 140 respectively.

The streaming processing section 130 performs a predetermined process, such as demodulation, on the stream that is transmitted from the server 12 via the network 15 and received by the communication processing section 124. The streaming processing section 130 supplies a packet obtained by performing the above-described predetermined process to the media selector 126.

The data receiving section 132 receives the data that is separated by the demultiplexer 128. The data that is separated by the demultiplexer 128 is data transmitted from the server 12 in a data carrousel transmission method, for example. The data received by the data receiving section 132 is to be supplied to the data cache 134.

The data cache 134 temporarily stores data supplied from the data receiving section 132. The data that the data cache 134 has stored describes a script that is generated in the server 12 and that is for a script processing in the script processing section 142. The data that the data cache 134 has stored is supplied to the script processing section 142 to be used for the script processing in the script processing section 142.

The event handler 136 receives the data that is separated by the demultiplexer 128. The event handler 136 notifies the script processing section 142 of a start of a processing subject to standby based on a standby instruction of a predetermined processing that is transmitted from the script processing section 142 to the event handler 136.

The video decoder 138 receives decoded video data that is separated by the demultiplexer 128, and executes a predetermined decoding processing to the decoded video data that is supplied. The audio decoder 140 receives decoded audio data that is separated by the demultiplexer 128, and executes a predetermined decoding processing to the decoded audio data that is supplied.

The script processing section 142 executes a script processing using data that is stored in the data cache 134. If the script processing section 142 executes the script processing, various processing associated with a switching between 2D video and 3D video that are displayed on the display section 158 is performed in the terminal 20. As the various processing associated with the switching between 2D video and 3D video is, for example, a switching between channels to be selected, a switching between streams to be received, a switching between streams to be played back, or the like. The details of the various processing associated with the switching between 2D video and 3D video will be explained later.

The terminal information storage section 144 stores information regarding the terminal 20. The information that is stored in the terminal information storage section 144 regarding the terminal 20 is, for example, information on whether to be compatible/incompatible with 3D video display, information on 3D video display mode to be compatible with, or the like, when being compatible with 3D video display. The information regarding the terminal 20, that is stored in the terminal information storage section 144, is read from the terminal information storage section 144 at a time of script processing by the script processing section 142, and is to be used for the script processing by the script processing section 142.

The 3D control section 146 instructs the 3D conversion processing section 148 to switch from 2D video signals displaying 2D video to 3D video signals displaying 3D video, and vice versa. The instruction from the 3D control section 146 to the 3D conversion processing section 148 is executed by a script processing of the script processing section 142.

The 3D conversion processing section 148 executes, based on the instruction from the 3D control section 146, switching from 2D video signals displaying 2D video to 3D video signals displaying 3D video, and vice versa, with respect to video signals supplied by the video decoder 138. As described above, the switching of video signals in the 3D conversion processing section 148 is executed based on the instruction from the 3D control section 146 by the script processing of the script processing section 142.

The recording section 150 records content data that the communication processing section 124 receives. The content data recorded in the recording section 150 is read out as needed, and is supplied to the media selector 126. The accumulation control section 152 confirms whether necessary content data is recorded in the recording section 150 based on the script processing by the script processing section 142.

The accumulation control section 152 determines whether necessary content data is recorded in the recording section 150, and returns whether the necessary content data is recorded in the recording section 150 to the script processing section 142. Then the accumulation control section 152 reads out the data from the recording section 150 if the necessary content data is recorded in the recording section 150, and supplies them to the media selector 126.

The channel selection control section 154 executes channel selection of broadcast channel. The channel selection control section 154 selects a channel, for example, that a user of the terminal 20 specified with a remote controller or the like. The channel selection control section 154 also executes channel selection control over channels to be specified by the script processing of the script processing section 142. The channel selection control section 154 controls the demodulating section 122, the media selector 126, and the demultiplexer 128 in order to play back a program of the selected channel.

The adding section 156 adds video signals from the 3D conversion processing section 148 to signals from the script processing section 142, and outputs it to the display section 158. The display section 158 displays an image using signals transmitted from the adding section 156. The speaker 160 outputs audio using audio signals decoded in the audio decoder 140.

The example of the configuration of the terminal 20 according to the embodiment of the present invention is described above with reference to FIG. 5. Next, an interface of a script executed in the script processing section 142 of the terminal 20 according to the embodiment of the present invention will be described.

### 6. Interface of the script

In the terminal 20 according to the embodiment of the present invention, the following functions are prepared for the scripts executed to switch between 2D video and 3D video. Note that each of names of functions explained below is not to be limited as shown below in the present invention.

### (1) 2D/3D switching interface: switch2D3D()

This function is to switch from 2D video to 3D video, and vice versa. As an argument, a switching flag and a 3D video system is specified. For example, switching from 2D video to 3D video is executed when the switching flag is 0, and switching from 3D video to 2D video is executed when the switching flag is 1. Moreover, a side by side (SBS) system is specified when the 3D video system is 1, a top and bottom (TB) system is specified when the 3D video system is 2, a flame sequential (FS) system when the 3D video system is 3, and a Multiview Video Coding (MVC) system is specified when the 3D video system is 4.

When the script processing section 142 executes the "switch2D3D()" function, the script processing section 142 instructs the 3D control section 146 to switch from 2D video signal processing to 3D video signal processing (and vice versa) using the specified 3D video system. When receiving an instruction from the script processing section 142, the 3D control section 146 instructs the 3D conversion processing section 148 to execute switching the signal processing based on the instruction. When the terminal 20 is not compatible with the 3D video system that has been specified by the "switch2D3D()" function, the script processing section 142 returns a predetermined error code.

### (2) 3D compatibility check interface: check3DSupport()

This function is to obtain information on whether the terminal is compatible with 3D video display. No argument is specified, and it returns a compatibility status with 3D video display as a return value in a bitmap. For example, in a bitmap as a return value, compatibility with the SBS system is described in the 0 bit, compatibility with the TB system is described in the 1st bit, compatibility with the FS system is described in the 2nd bit, and compatibility with the MVC system is described in the 3rd bit.

When the script processing section 142 executes the "check3DSupport()" function, the script processing section 142 reads configuration information of the terminal 20 from the terminal information storage section 144, and outputs compatibility status with 3D video display as a return value.

### (3) IPTV compatibility check interface: checkIPTVSupport()

This function is to obtain information on whether the terminal is compatible with IPTV (Internet Protocol Television). No argument is specified, and it returns a compatibility status with IPTV as a return value in a bitmap. For example, in a bitmap as a return value, compatibility with progressive download of content is described in the 0 bit, and compatibility with streaming of content is described in the 1st bit.

When the script processing section 142 executes the "checkIPTVSupport()" function, the script processing section 142 reads configuration information of the terminal 20 from the terminal information storage section 144, and outputs compatibility status with IPTV as a return value.

### (4) Broadcast channel selection interface: epgTune()

This function is to select specified broadcast channel, and this function has been already standardized in digital broadcasting in Japan. This function specifies a broadcast channel service ID (channel number) to be selected as an argument to execute.

When the script processing section 142 executes the "epgTune()", the script processing section 142 instructs the channel selection control section 154 to select a broadcast channel that is specified by an argument in the "epgTune()" from broadcast channels that is currently selected. Other scripts currently running on the script processing section. 142 are, if any, to be ended after executing the "epgTune()" function.

### (5) Accumulation check interface: checkDownloadedContent()

This function is to confirm whether specified content is already accumulated on the terminal. This function specifies a content ID subject to be confirmed as an argument to execute. An accumulation status is to be returned as a return value as a result of execution of this function. For example, if content with the specified content ID is already accumulated, 1 is to be retuned as a return value, if content with the specified content ID is not accumulated, 0 is to be returned as a return value.

When the script processing section 142 executes the "checkDowntoadedContent()" function, the script processing section 142 instructs the accumulation control section 152 to confirm whether content with content ID specified by an argument is recorded in the recording section 150. The accumulation control section 152, which has received an instruction by the script processing section 142, confirms whether content with content ID specified by an argument is recorded in the recording section 150, and returns a result of confirming as accumulated status information to the script processing section 142.

### (6) Accumulated content playback start interface: playDownloadedcontent()

This function is to start playback of accumulated content that is specified. This function specifies a content ID subject to be started as an argument to execute. As an option for arguments, playback start position can be specified in the number of seconds from the beginning. Then, when the playback of the accumulated content that is specified ends, it returns to a previous broadcast channel to continue displaying video image.

When the script processing section 142 executes the "playDowntoadedContent()" function, the script processing section 142 instructs the accumulation control section 152 to read content with content ID that is specified by an argument from the recording section 150 and to play back the content read out. The accumulation control section 152, which has received an instruction from the script processing section 142, read the specified content from the recording section 150, and plays back the content read out from the beginning (or from a position specified). Moreover, when the script processing section 142 executes this "playDownloadedContent()" function, it stops decoding programs or content which are currently played back. Further, other scripts currently running on the script processing section 142 are, if any, to be ended after executing the "playDownloadedContent()" function.

### (7) Streaming playback start interface: startStreaming()

This function is to start streaming. This function specifies URL (Uniform Resource Location) of content to be streamed as an argument to execute. As an option for arguments, streaming start position can be specified in the number of seconds from the beginning. Then, when the streaming ends, it returns to a previous broadcast channel to continue displaying video image.

When the script processing section 142 executes the "startStreaming()", the script processing section 142 instructs the streaming processing section 130 to access to URL specified by an argument and to start reception of the content and streaming. The streaming processing section 130, which receives an instruction from the script processing section 142, receives content from the specified URL and start streaming from the beginning (or from the specified position). Moreover, when the script processing section 142 executes the "startStreaming()", it stops decoding programs or content currently being played back. Further, other scripts currently running on the script processing section 142 are, if any, to be ended after executing the "startStreaming()" function.

Interface of script executed when switching between 2D video and 3D video in the terminal 20 according to an embodiment of the present invention is explained as above. Executing a script having such an interface on the terminal 20 enables to switch automatically between 2D video and 3D video. Next, processing of switching between 2D video and 3D video by a script having these interfaces will be explained.

### 7. Switching process between 2D broadcast channel and 3D broadcast channel by script

### 7-1. Switching process between 2D broadcast channel and 3D broadcast channel

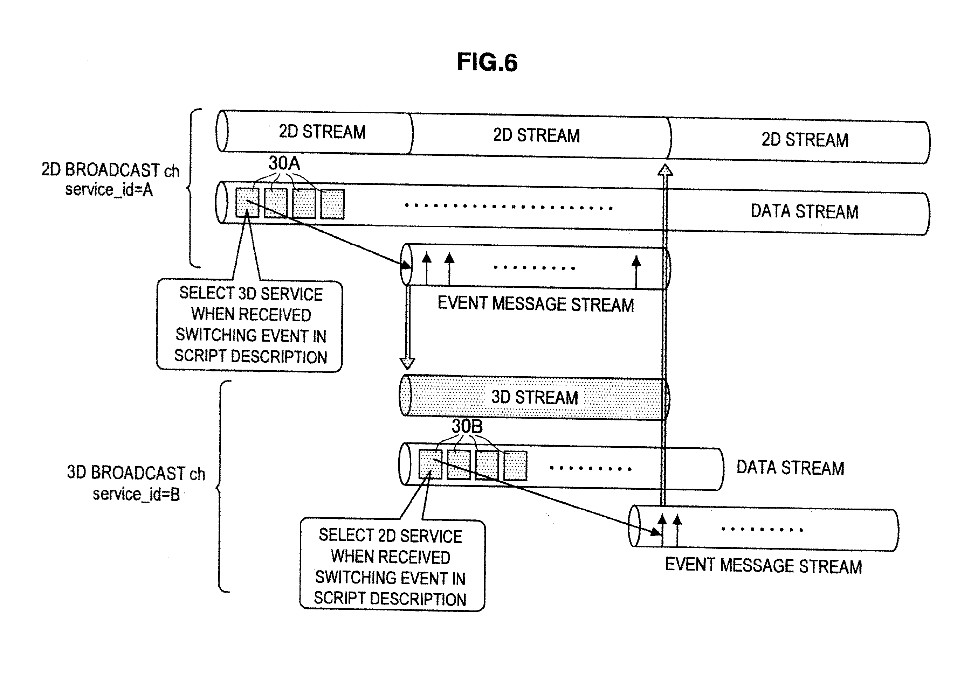

First, processing of switching between 2D broadcast channel and 3D broadcast channel by script will be explained. This case corresponds to a case of (2) 3D stream transmission using other TS, which is described above in "2. Transmission media mode in 3D video section". FIG. 6 is an explanatory view showing the overview of switching process between 2D broadcast channel and 3D broadcast channel by script. Hereinafter, the overview of switching process between 2D broadcast channel and 3D broadcast channel by script will be explained with reference to FIG. 6.

When the terminal 20 is selecting a broadcast channel that displays 2D video, stream to display 2D video is transmitting from a broadcast station. The terminal 20 plays back the 2D stream from the broadcast station, and display the 2D video on the display section 158. Moreover, a script 30A that is to be executed on the terminal 20 along with the 2D stream is transmitted in a data stream. In this script 30A, a script to switch from 2D video to 3D video is described, and the script described in the script 30A is to be executed associating with an occurrence of an event to switch from 2D video to 3D video, which is described in an event message stream that is transmitted from the broadcast station.

When the event to switch from 2D video to 3D video occurs and a broadcast channel that displays 2D video is switched to a broadcast channel that displays 3D video specified in the script 30A, stream that displays 3D video (3D stream) is transmitting from the broadcast station. The terminal 20 plays back the 3D stream from the broadcast station, and displays the 3D video on the display section 158. Moreover, a script 30B that is to be executed on the terminal 20 along with the 3D stream is transmitted in a data stream. In this script B30, a script to switch from 3D video to 2D video is described, and the script described in the script B30 is to be executed associating with an occurrence of an event to switch from 3D video to 2D video, which is described in an event message stream that is transmitted from the broadcast station.

Then when the event to switch from 3D video to 2D video occurs and returns to a broadcast channel that displays the original 2D video, the terminal 20 plays back 2D stream from the broadcast station and displays 2D video on the display section 158.

Thus, when executing the script 30A and 30B in the terminal 20, the terminal 20 can display switching between 2D video and 3D video by switching between 2D broadcast channel and 3D broadcast channel with accompanying an occurrence of an event to switch between 2D video and 3D video.

The overview of switching process between 2D broadcast channel and 3D broadcast channel by script is explained above with reference to FIG. 6. Next, the details of switching process between 2D broadcast channel and 3D broadcast channel by script will be explained.

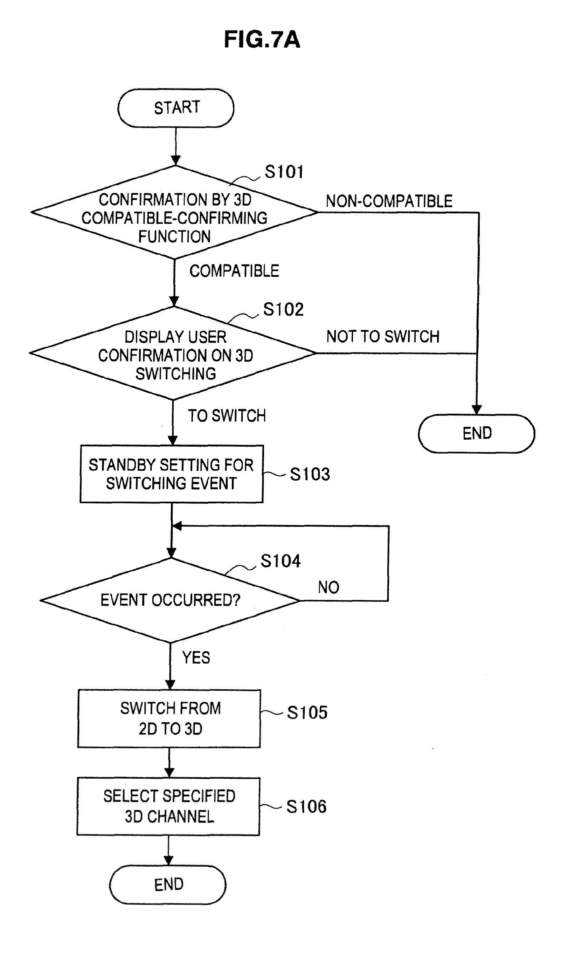

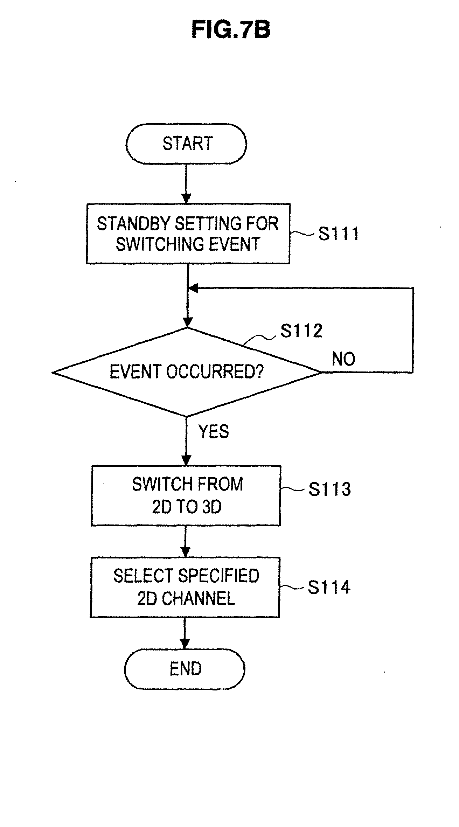

FIG. 7A and 7B are a flowchart showing the switching process between 2D broadcast channel and 3D broadcast channel by script. Hereinafter, switching process between 2D broadcast channel and 3D broadcast channel by script will be explained with reference to FIG. 7A and 7B.

First, while displaying 2D video on the terminal 20, the terminal 20 receives a script transmitted from a broadcast station. If the 3D compatibility check function, "check3DSupport()", which is described in the received script 30A, on the script processing section 142, is executed, confirmation on whether the terminal 20 is compatible with 3D video display is to be performed (step S101).

When it is determined as a result of confirming in step S101 described above that the terminal 20 is not compatible with 3D video display, the processing ends. On the other hand, when it is determined as a result of confirming in step S101 above that the terminal 20 is compatible with 3D video display, subsequently, by displaying a message or the like on the display section 158, a user is to be confirmed whether to execute switching from 2D video to 3D video (step S102).

When the user selected not to execute switching from 2D video to 3D video as a result of confirming in step S102 above, the processing ends. On the other hand, when the user selected to execute switching from 2D video to 3D video as a result of confirming in step S102 above, subsequently the script processing section 142 sets the event handler 136 to stand-by for an occurrence of an event of switching from 2D video to 3D video (step S103). When the event handler 136 starts to stand by for the event of switching from 2D video to 3D video, the event handler 136 stands by until the event of switching from 2D video to 3D video (step S104).

When the event handler 136 detects the occurrence of the event of switching from 2D video to 3D video, the event handler 136 notifies the script processing section 142 of the occurrence of the event of switching from 2D video to 3D video. When the script processing section 142 receives a notification from the event handler 136, it starts the processing of switching from 2D video to 3D video (step S105).

The switching from 2D video to 3D video is performed by the script processing section 142 executing a switching function "switch2D3D()" described in the received script 30A. As for a case of switching between 2D broadcast channel and 3D broadcast channel, the script processing section 142 executes a "epgTune()" function described in the script 30A, and specifies the channel selection control section 154 to select a broadcast channel specified by an argument in the "epgTune()" function. When receiving an instruction of channel selection from the script processing section 142, the channel selection control section 154 instructs the demodulating section 122, the media selector 126, and the demultiplexer 128 to select the specified broadcast channel (step S106). The demodulating section 122 that has received an instruction from the channel selection control section 154 extracts broadcast signals of predetermined band corresponding to the specified broadcast channel. Then the demodulating section 122 executes a demodulating processing with respect to the extracted broadcast signals. Thus switching to 3D broadcast channel as a channel to select enables broadcast signals of 3D broadcast channel to be decoded, and enables the display section 158 to display 3D video.

Next, the processing of switching from 3D broadcast channel to 2D broadcast channel will be explained. While displaying 3D video on the terminal 20, the terminal 20 receives the script 30B transmitted from a broadcast station. This reception of the script 30B is performed right after the switching to 3D broadcast channel. If the terminal 20 receives the script 30B, the script processing section 142 sets the event handler 136 to stand-by for an occurrence of an event of switching from 3D video to 2D video (step S111).

When the event handler 136 starts to stand-by for the event of switching from 3D video to 2D video, the event handler 136 stands by until the event of switching from 3D video to 2D video (step S112).

When the event handler 136 detects the occurrence of the event of switching from 3D video to 2D video, the event handler 136 notifies the script processing section 142 of the occurrence of the event of switching from 2D video to 3D video. When the script processing section 142 receives a notification from the event handler 136, it starts the processing of switching from 2D video to 3D video (step S113).

The switching from 3D video to 2D video is performed, same as the switching from 2D video to 3D video described above, by the script processing section 142 executing a switching function "switch2D3D()"' described in the received script 30B. As for a case of switching between 3D broadcast channel and 2D broadcast channel, the script processing section 142 executes a "epgTune()" function described in the script 30B, and specifies the channel selection control section 154 to select a broadcast channel specified by an argument in the "epgTune()" function. When receiving an instruction of channel selection from the script processing section 142, the channel selection control section 154 instructs the demodulating section 122, the media selector 126, and the demultiplexer 128 to select the specified broadcast channel (step S114). The demodulating section, 122 that has received an instruction from the channel selection control section 154 extracts broadcast signals of predetermined band corresponding to the specified broadcast channel. Then the demodulating section 122 executes a demodulating processing with respect to the extracted broadcast signals. Thus switching to 2D broadcast channel as a channel to select enables to decode broadcast signals of 2D broadcast channel, and to display 2D video on the display section 158.

The switching process between 2D broadcast channel and 3D broadcast channel by script has been described above. Next, a switching process between 2D broadcast channel and 3D streaming by script will be explained.

### 7-2. Switching process between 2D broadcast channel and 3D streaming

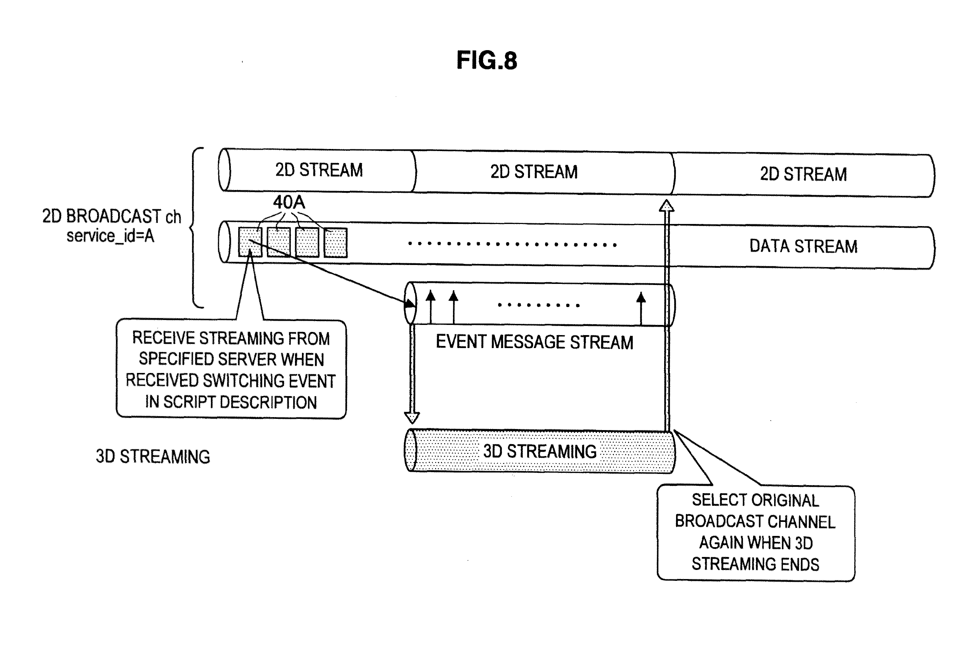

This case corresponds to a case of (3) 3D stream transmission by streaming, which is described above in "2. Transmission media mode in 3D video section". FIG. 8 is an explanatory view showing the overview of switching process between 2D broadcast channel and 3D streaming by script. Hereinafter, the overview of switching process between 2D broadcast channel and 3D streaming by script will be explained with reference to FIG. 8.

When the terminal 20 is selecting a broadcast channel that displays 2D video, stream to display 2D video is transmitting from a broadcast station. The terminal 20 plays back the 2D stream from the broadcast station, and display the 2D video on the display section 158. Moreover, a script 40A that is to be executed on the terminal 20 along with the 2D stream is transmitted in a data stream. In this script 40A, a script to switch from 2D video to 3D video is described, and the script described in the script 40A is to be executed associating with an occurrence of an event to switch from 2D video to 3D video, which is described in an event message stream that is transmitted from the broadcast station.

When the event to switch from 2D video to 3D video occurs and a broadcast channel that displays 2D video is switched to streaming from a server specified in the script 40A, stream that displays 3D video (3D stream) is transmitting from the server. The terminal 20 plays back the 3D stream from the server, and displays the 3D video on the display section 158. While 3D video is displayed, a script 40A that is to be executed on the terminal 20 along with the 2D stream is transmitted in a data stream from a broadcast station. In this script 40A, a script to switch from 3D video to 2D video is described, and when the streaming from the server ends, the terminal 20 selects the broadcast station that has been previously selected before displaying 3D video to return to the 2D video display.

Thus, when executing the script 40A in the terminal 20, the terminal 20 can display switching between 2D video and 3D video by switching between 2D broadcast channel and 3D streaming with accompanying an occurrence of an event to switch between 2D video and 3D video.

The overview of switching process between 2D broadcast channel and 3D streaming by script has been explained with reference to FIG. 8. Hereinafter, the details of switching process between 2D broadcast channel and 3D streaming by script will be explained.

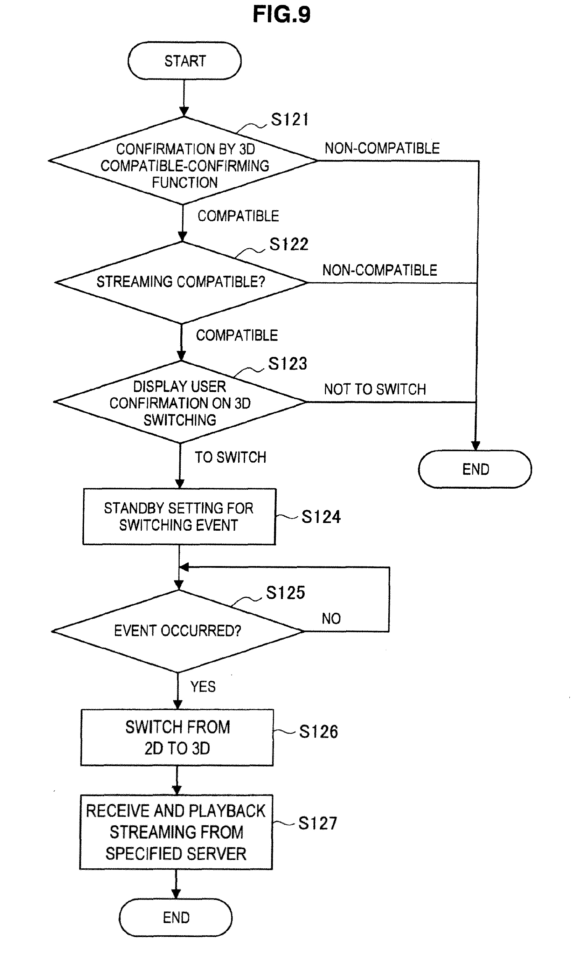

FIG. 9 is a flowchart showing the switching process between 2D broadcast channel and 3D streaming by script. Hereinafter, the switching process between 2D broadcast channel and 3D streaming by script will be explained with reference to FIG. 9.

First, while displaying 2D video on the terminal 20, the terminal 20 receives a script transmitted from a broadcast station. If the 3D compatibility check function, "check3DSupport()", which is described in the received script 40A, on the script processing section 142, is executed, confirmation on whether the terminal 20 is compatible with 3D video display is to be performed (step S121).

When it is determined as a result of confirming in step S121 described above that the terminal 20 is not compatible with 3D video display, the processing ends. On the other hand, when it is determined as a result of confirming in step S121 above that the terminal 20 is compatible with 3D video display, subsequently an IPTV compatibility check function "checkIPTVSupport()" described in the script 40A is executed in the script processing section 142 to confirm whether the terminal 20 is compatible with streaming (step S122).

When it is determined as a result of confirming in step S122 described above that the terminal 20 is not compatible with streaming, the processing ends. On the other hand, when it is determined as a result of confirming in step S122 above that the terminal 20 is compatible with streaming, subsequently, by displaying a message or the like on the display section 158, a user is to be confirmed whether to execute switching from 2D video to 3D video (step S123).

When the user selected not to execute switching from 2D video to 3D video as a result of confirming in step S123 above, the processing ends. On the other hand, when the user selected to execute switching from 2D video to 3D video as a result of confirming in step S102 above, subsequently the script processing section 142 sets the event handler 136 to standby an occurrence of an event of switching from 2D video to 3D video (step S124). When the event handler 136 starts to stand-by for the event of switching from 2D video to 3D video, the event handler 136 stands by until the event of switching from 2D video to 3D video (step S125).

When the event handler 136 detects the occurrence of the event of switching from 2D video to 3D video, the event handler 136 notifies the script processing section 142 of the occurrence of the event of switching from 2D video to 3D video. When the script processing section 142 receives a notification from the event handier 136, it starts the processing of switching from 2D video to 3D video (step S126).

The switching from 2D video to 3D video is performed by the script processing section 142 executing a switching function "switch2D3D()" described in the received script 40A. As for a case of switching between 2D broadcast channel and 3Dstreaming, the script processing section 142 executes a "startStreaming()" function described in the script 40A, and instructs the streaming processing section 130 to access a server specified by an argument in the "startStreaming()" function to execute streaming.

The script processing section 142 instructs the channel selection control section 154 to prioritize streaming in the streaming processing section 130. If receiving an instruction from the script processing section 142, the channel selection control section 154 instructs the demodulating section 122, the media selector 126, and demultiplexer 128 to prioritize streaming in the streaming processing section 130 (step S127). Thus switching from 2D broadcast channel to 3D streaming enables the display section 158 to display 3D video.

When 3D streaming ends, the script processing section 142 instructs the channel selection control section 154 to select the previous 2D broadcast station. When receiving an instruction from the script processing section 142, the channel selection control section 154 instructs the demodulating section, 122, the media selector 126, and demultiplexer 128 to select the previous 2D broadcast channel.

The switching process between 2D broadcast channel and 3D streaming by script has been explained. Hereinafter, the details of switching process between 2D broadcast channel and playback of downloaded 3D content by script will be explained.

### 7-3. Switching process between 2D broadcast channel and playback of downloaded 3D content by script.

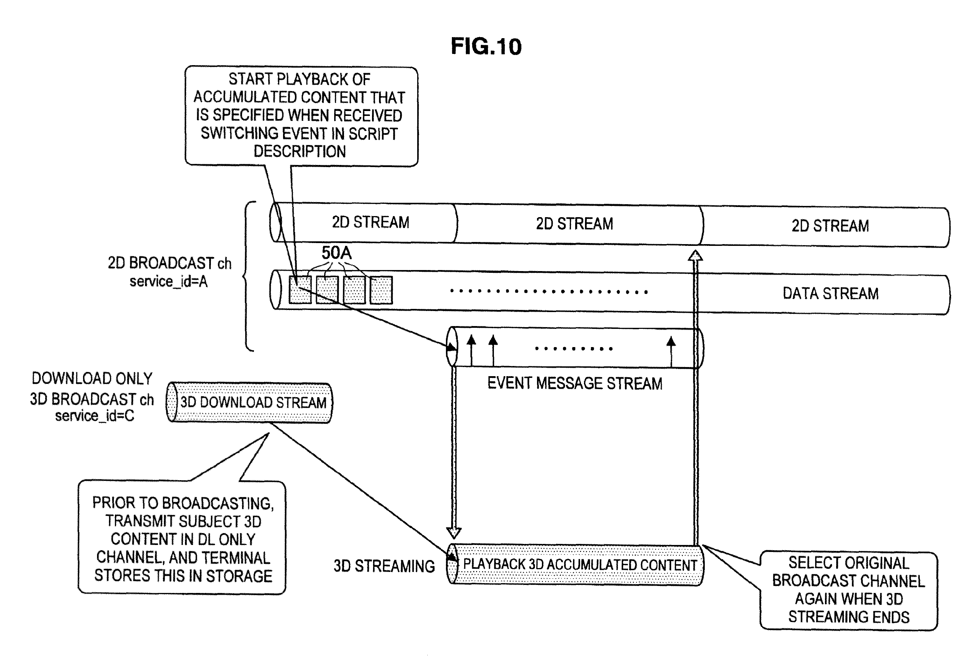

This case corresponds to a case of (4) 3D stream transmission by downloading, which is described above in "2. Transmission media mode in 3D video section". FIG. 8 is an explanatory view showing the overview of switching process between 2D broadcast channel and playback of downloaded 3D content by script. Hereinafter, the overview of switching process between 2D broadcast channel and playback of downloaded 3D content by script will be explained with reference to FIG. 10.

When the terminal 20 is selecting a broadcast channel that displays 2D video, stream to display 2D video is transmitting from a broadcast station. The terminal 20 plays back the 2D stream from the broadcast station, and display the 2D video on the display section 158. Moreover, a script 50A that is to be executed on the terminal 20 along with the 2D stream is transmitted in a data stream. In this script 50A, a script to switch from 2D video to 3D video is described, and the script described in the script 50A is to be executed associating with an occurrence of an event to switch from 2D video to 3D video, which is described in an event message stream that is transmitted from the broadcast station.

Then content to display 3D video is transmitted from a broadcast station (or a content provider) prior to broadcasting, and the terminal 20 accumulates the content transmitted from the broadcast station in the recording section 150.

When the event to switch from 2D video to 3D video occurs and a broadcast channel that displays 2D video is switched to playback of the accumulated content specified in the script 50A, the terminal 20 plays back the content that has been recorded in advance in the recording section 150, and displays 3D video on the display section 158. While 3D video is displayed, a script 50A that is to be executed on the terminal 20 along with the 2D stream is transmitted in a data stream from a broadcast station. In this script 50A, a script to switch from 3D video to 2D video is described, and when the playback of the accumulated content ends, the terminal 20 selects the broadcast station that has been previously selected before displaying 3D video to return to the 2D video display.

Thus, when executing the script 50A in the terminal 20, the terminal 20 can display switching between 2D video and 3D video by switching between 2D broadcast channel and playback of downloaded 3D content with accompanying an occurrence of an event to switch between 2D video and 3D video.

The overview of switching process between 2D broadcast channel and playback of downloaded 3D content by script has been explained with reference to FIG. 10. Hereinafter, the details of switching process between 2D broadcast channel and playback of downloaded 3D content by script will be explained.

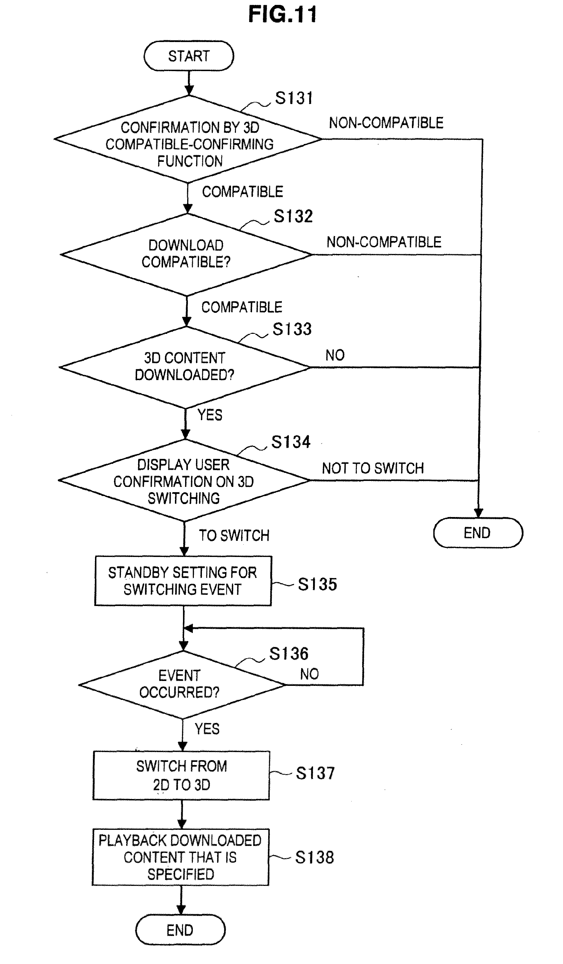

FIG. 11 is a flow chart showing the switching process between 2D broadcast channel and playback of downloaded 3D content by script. Hereinafter, the switching process between 2D broadcast channel and playback of downloaded 3D content by script will be described with reference to FIG. 11.

First, while displaying 2D video on the terminal 20, the terminal 20 receives a script transmitted from a broadcast station. If the 3D compatibility check function, "check3DSupport()", which is described in the received script 50A, on the script processing section 142, is executed, confirmation on whether the terminal 20 is compatible with 3D video display is to be performed (step S131).

When it is determined as a result of confirming in step S131 described above that the terminal 20 is not compatible with 3D video display, the processing ends since the terminal 20 cannot display 3D video. On the other hand, when it is determined as a result of confirming in step S131 above that the terminal 20 is compatible with 3D video display, subsequently an IPTV compatibility check function "checkIPTVSupport()" described in the script 50A is executed in the script processing section 142 to confirm whether the terminal 20 is compatible with progressive download (step S132).

When it is determined as a result of confirming in step S132 described above that the terminal 20 is not compatible with progressive download, the processing ends. On the other hand, when it is determined as a result of confirming in step S132 above that the terminal 20 is compatible with progressive download, subsequently, it will be confirmed whether the terminal 20 has already downloaded content to display 3D video specified by script (step S133). The script processing section 142 confirms whether it is already downloaded by executing the "checkDownloadedContent()" function described in the script 50A.

When it is determined as a result of confirming in step S133 described above that the terminal 20 has not already downloaded the content to display 3D video specified by the script 50A, the processing ends since 3D video cannot be displayed. On the other hand, when it is determined as a result of confirming in step S133 above that the terminal 20 has already downloaded the content to display 3D video specified by the script 50A, subsequently, by displaying a message or the like on the display section 158, a user is to be confirmed whether to execute switching from 2D video to 3D video (step S134).

When the user selected not to execute switching from 2D video to 3D video as a result of confirming in step S134 above, the processing ends. On the other hand, when the user selected to execute switching from 2D video to 3D video as a result of confirming in step S102 above, subsequently the script processing section 142 sets the event handler 136 to standby an occurrence of an event of switching from 2D video to 3D video (step S135). When the event handler 136 starts to stand-by for the event of switching from 2D video to 3D video, the event handler 136 stands by until the event of switching from 2D video to 3D video (step S136).

When the event handler 136 detects the occurrence of the event of switching from 2D video to 3D video, the event handler 136 notifies the script processing section 142 of the occurrence of the event of switching from 2D video to 3D video. When the script processing section 142 receives a notification from the event handler 136, it starts the processing of switching from 2D video to 3D video (step S137).

The switching from 2D video to 3D video is performed by the script processing section 142 executing a switching function "switch2D3D()" described in the received script 50A. As for a case of switching between 2D broadcast channel and playback of downloaded 3D content, the script processing section 142 executes a "playDownloadedCantent()" function described in the script 50A, and instructs the accumulation control section 152 to read and play back content specified by an argument in the "playDownloadedContent()" function.

The script processing section 142 instructs the channel selection control section 154 to prioritize streaming in the streaming processing section 130. If receiving an instruction from the script processing section 142, the channel selection control section 154 instructs the demodulating section 122, the media selector 126, and demultiplexer 128 to prioritize playback of downloaded content accumulated in the recording section 150 (step S138). Thus switching from 2D broadcast channel to playback of downloaded 3D content enables the display section 158 to display 3D video.

When playback of downloaded 3D content ends, the script processing section 142 instructs the channel selection control section 154 to select the previous 2D broadcast station. When receiving an instruction from the script processing section 142, the channel selection control section 154 instructs the demodulating section 122, the media selector 126, and demultiplexer 128 to select the previous 2D broadcast channel.

The switching between 2D broadcast channel and playback of downloaded 3D content by script has been explained. Thus, executing the script having the interface described above on the terminal 20, the terminal 20 enables to display on the display section 158 switching between 2D video and 3D video.

### 8. Conclusion

According to the embodiment of the present invention described above, a broadcast station (or a content provider) prepares a script describing various functions to switch between 2D video and 3D video, and includes them into broadcast signals to transmit. The terminal displaying the video extracts the script from the broadcast signals, and executes the various functions to switch between 2D video and 3D video. Executing the various functions described in the script in the terminal enables the terminal, if it is compatible with the 3D video display, to display switching between 2D video and 3D video.

Note that the series of processes described above can be performed by either hardware or software. When the series of processes are performed by software, a program forming the software is installed from a program recording medium into a computer built into dedicated hardware or, for example, a multipurpose personal computer that is capable of executing various types of functions by installing various programs.

The communication may be wireless communication or wired communication, or a combination of wireless communication and wired communication. More specifically, wireless communication may be performed in a certain section, and wired communication may be performed in another section. Further, communication from a certain device to another device may be performed by wired communication, and communication from the other device to the certain device may be performed by wireless communication.

The preferred embodiments of the present invention have been explained in detail above with reference to the attached drawings, but the present invention is not limited to these examples. It should be understood by those possessing ordinary knowledge of the technical field of the present invention that various types of modified examples and revised examples are clearly conceivable within the scope of the technical concepts that are described in the appended claims, and that these modified examples and revised examples are obviously within the technical scope of the present invention.

### The present invention is applicable to a receiving device, a receiving method, a transmission device and a computer program.

The present application contains subject matter related to that disclosed in Japanese Priority Patent Application JP 2009-214296 filed in the Japan Patent Office on September 16, 2009.

## Claims

1. A receiving device comprising:
a receiving section (132) that receives image data that displays a stereoscopic image in some portion of a program in a broadcast channel, a procedure description information that comprises of supply source information of the stereoscopic image data when displaying the stereoscopic image transmitted along with broadcast signals, and a switching instruction information that indicates an instruction timing for switching of the stereoscopic image transmitted along with the broadcast signals;
a procedure description information analyzing section that analyzes the procedure description information received by the receiving section (132) and switches the supply source of the stereoscopic image data based on the analysis result;
a switch notifying section that stands by for the switching instruction information of the stereoscopic image data based on an analysis of the procedure description information by the procedure description information analyzing section, and notifying the procedure description information analyzing section when the switching instruction information for switching to the stereoscopic image data has been received; and
a playback control section that switches to playback the stereoscopic image data based on the supply source information from the procedure description information analyzing section and the switching instruction for the stereoscopic image data from the procedure description information analyzing section.

2. The receiving device according to claim 1,
wherein, if an ES (Elementary Stream) specified by the supply source is different from the ES specified by the broadcast signal, the playback control section receives and switches to playback the ES specified by the supply source according to an analysis result of the procedure description information.

3. The device according to claim 1,
wherein, when a supply source of a stereoscopic image data is a streaming transmission from a server as a result of analysis by the procedure description information analyzing section, confirming whether the receiving device has a streaming receiving function, then the playback control section receives and switches to playback the streaming transmitted from the server specified by the supply source.

4. The receiving device according to claim 1,
wherein, when a supply source of a stereoscopic image data needs to be downloaded in advance prior to the portion as a result of analysis by the procedure description information analyzing section, the playback control section confirms whether the receiving device has a download function and whether the stereoscopic image data has been downloaded in advance in the receiving device switches to playback data specified by the supply source according to an analysis result of continued procedure description information.

5. A receiving method comprising the steps of:
receiving image data that displays a stereoscopic image in some portion of a program in a broadcast channel, procedure description information that comprises of supply source information of the stereoscopic image data at a time of displaying the stereoscopic image transmitted along with broadcast signals and that includes, and a switching instruction information that indicates an instruction timing for switching of the stereoscopic image transmitted along with the broadcast signals;
analyzing the procedure description information received by the receiving section, and switches the supply source of the stereoscopic image data based on the analysis result;
standing by for the switching instruction information of the stereoscopic image data based on an analysis of the procedure description information and notifying the switching of the stereoscopic image data when switching instruction information is received; and
controlling a playback that switches to playback the stereoscopic image data based on supply source information obtained as a result of the step of analyzing the procedure description information and the switching instruction for the stereoscopic image data in the step of notifying a switching.

6. A transmission device comprising:
a procedure description information generation section which generates procedure description information, that comprises of a supply source information of the stereoscopic image data when displaying a stereoscopic image data that displays a stereoscopic image in some portion of a program in a broadcast channel; and
a transmitting section that transmits procedure description information generated by the procedure description information generation section along with broadcast signals.

7. A computer program to cause a computer to execute the steps of:
receiving image data that displays a stereoscopic image in some portion of a program in a broadcast channel, procedure description information that comprises of a supply source information of the stereoscopic image data at a time of displaying the stereoscopic image transmitted along with broadcast signals , and a switching instruction information that indicates an instruction timing for switching to the stereoscopic image transmitted along with the broadcast signals;
analyzing the received procedure description information and switches to the supply source of the stereoscopic image data based on the analysis result;
standing by for the switching instruction information of the stereoscopic image data based on the analysis of the procedure description information, and notifying a switching to the stereoscopic image data when switching instruction information is received; and
controlling a playback that switches to playback the stereoscopic image data based on supply source information obtained as a result of the step of analyzing the procedure description information and the switching instruction for the stereoscopic image data in the step of notifying.
